Europäisches Patentamt

European Patent Office

Office européen des brevets

(11) Veröffentlichungsnummer: **0 341 191**
**A2**

## (12) EUROPÄISCHE PATENTANMELDUNG

(21) Anmeldenummer: 89710029.3

(22) Anmeldetag: 18.04.89

(51) Int. Cl.⁴: **A 01 K 45/00**

(30) Priorität: 30.04.88 DE 3814724

(43) Veröffentlichungstag der Anmeldung:
08.11.89 Patentblatt 89/45

(84) Benannte Vertragsstaaten: **DE FR GB NL**

(71) Anmelder: **LOHMANN-ANLAGENBAU GMBH**
**Altenwalder Chaussee 94-100**
**D-2190 Cuxhaven (DE)**

(72) Erfinder: **Ostholt, Rüdiger**
**D-5802 Wetter 2 (DE)**

**Wenke, Klaus**
**D-4322 Sprockhövel 2 (DE)**

**Becker, Klaus, Dr.**
**D-5802 Wetter 1 (DE)**

(74) Vertreter: **Dipl.-Ing. H. Hauck Dipl.-Ing. E. Graalfs**
**Dipl.-Ing. W. Wehnert Dr.-Ing. W. Döring**
**Neuer Wall 41**
**D-2000 Hamburg 36 (DE)**

(54) Containersystem zum Transport von Geflügel oder anderen Kleintieren.

(57) Containersystem zum Transport von Geflügel oder anderen Kleintieren, mit einem quaderförmigen Containerrahmen, der in Reihe von übereinander und nebeneinander angeordneten horizontalen Fächern unterteilt ist, die Auflagerflächen für nach oben offene Schubladen aufweisen, die entfernbar und in die Fächer einsetzbar sind, wobei in den Fächern Anschläge oder dergleichen angeordnet sind, die mit den aufgenommenen Schubladen zusammenwirken und in ihrer Lage sichern und wobei die Oberseite des Rahmens von einer Decke abgeschlossen ist, wobei die Eintrittsöffnungen der Fächer an der Längsseite des Rahmens angeordnet sind, zwischen vertikalen Fächeranordnungen der Rahmen einen Quer- vorzugsweise Kreuzverband aufweist, und ein steifer Grundrahmen mit einseitigen Einfahröffnungen für die Gabel eines Gabelstaplers vorgesehen ist.

FIG.1

EP 0 341 191 A2

Beschreibung

## Containersystem zum Transport von Geflügel oder anderen Kleintieren

Die Erfindung bezieht sich auf ein Containersystem zum Transport von Geflügel oder anderen Kleintieren nach dem Oberbegriff des Patentanspruchs 1.

Aus dem EP-A-0 005 755 ist ein Containersystem zum Transport von Geflügel bekannt geworden, das einen quaderförmigen Containerrahmen aufweist, der übereinander und nebeneinander angeordnete Fächer aufweist zur Aufnahme von nach oben offenen Schubladen. Die Schubladen sind verhältnismäßig lang und werden von einer Stirnseite aus eingeschoben. Sie weisen an den Seiten versenkte durchgehende Kanäle auf, in die in Con tainerrahmen drehbar angeordnete Rollen eingreifen. Eine spezielle Verriegelung sorgt dafür, daß die Schubladen im eingefahrenen Zustand nicht ungewollt herausrollen. Das Dach des Containerrahmens ist durch eine Dachplatte verschlossen, damit das Geflügel in den oberen Schubladen nicht entweicht und durch Regen oder dergleichen nicht beeinträchtigt ist.

Die Höhe derartiger Containerrahmen ist naturgemäß begrenzt durch die Standarddurchfahrthöhe für Lastkraftwagen, die 4 Meter beträgt. Berücksichtigt man, daß bei Winterfahrten eine Abdeckung erforderlich ist, ist dadurch die maximal zulässige Containerhöhe vorgegeben. Andererseits ist eine Mindesthöhe für Geflügelbehälter vorgeschrieben. Die maximale Ladekapazität mit Containern zur Aufnahme von Geflügel ist daher durch diese Größen vorgegeben. Im übrigen muß gewährleistet sein, daß die Schubladen ausreichend stabil sind, insbesondere eine zu große Durchbiegung des Bodens vermieden wird. Eine Bodendurchbiegung führt zu einer Beschränkung des Raums in der darunter befindlichen Schublade. Außerdem können sich Lachen von Wasser und Ausscheidungen in der Fachmitte bilden. Die Fachseiten müssen Luft durchlassen, damit die entstehende Tierwärme gut abgeführt wird.

Der Erfindung liegt die Aufgabe zugrunde, ein Containersystem zum Transport von Geflügel oder anderen Kleintieren zu schaf fen, in dem die Schubladen bei Einhaltung behördlich vorgeschriebener Abmessungen mit minimalem Platzbedarf aufgenommen werden und der Containerrahmen und die Schubladen so ausgebildet sind, daß sie den Bedürfnissen der aufgenommenen Tiere entgegenkommen und auch gut und leicht zu reinigen sind.

Diese Aufgabe wird durch die Merkmale des Kennzeichnungsteils des Anspruches 1 gelöst.

Beim erfindungsgemäßen Containersystem sind die Einschuböffnungen der Fächer an einer der beiden Längsseiten des Rahmens angeordnet. Dadurch erstrecken sich die Schubladen über die Tiefe des Containers und sind naturgemäß kürzer als wenn sie wie im Stand der Technik über die Länge des Containers gehen. Eine Schublade kann auf diese Weise auf herkömmlichen Ladeflächen von Lastkraftwagen in doppelter Länge in Querrichtung Platz haben, so daß zwei Containerrahmen mit den Breitseiten einander gegenüber angeordnet werden können. Die u.U. relativ kurze Länge der Schubladen ermöglicht eine leichtere Handhabbarkeit, auch von Hand. Es ist daher auch nicht notwendig, eine besonders leichtgängige Führung der Schubladen im Containerrahmen sicherzustellen, die überdies platzraubend und aufwendig ist.

Erfindungswesentlich ist ferner, daß zwischen benachbarten vertikalen Fächeranordnungen, vorzugsweise drei an der Zahl, der Containerrahmen einen Quer- vorzugsweise Kreuzverband aufweist. Der Kreuzverband, der z.B. aus einfachen Flach stäben gebildet werden kann, läßt sich raumsparend unterbringen und sorgt für eine ausreichende Querstabilität des Containerrahmens. Der Grundrahmen ist verhältnismäßig steif ausgeführt und weist Einführöffnungen für die Gabel eines Gabelstaplers auf. Bis auf den Grundrahmen kann daher eine relativ leichte Konstruktion für den Containerrahmen gewählt werden, so daß der Container, auch mit Inhalt, mittels herkömmlicher Gabelstapler bewegt werden kann, z.B. zum Beladen auf einen Lastkraftwagen oder zum Entladen von diesem.

Der Aufbau des erfindungsgemäßen Containersystems erlaubt eine stabile, das vorhandene Volumen des Rahmens optimal ausnutzende Konstruktion.

Da die Schubladen von handhabbarer Größe sind, sind etwa Rollen, wie sie beim bekannten System zum Verschieben im Containerrahmen vorgesehen sind, nicht erforderlich. Vielmehr wird nach einer Ausgestaltung der Erfindung vorgeschlagen, die Aufnahmeflächen vorzugsweise von rechtwinkligen seitlichen Gleitflächen zu bilden, die die Schubladen von unten und seitlich führen. Damit die Schubladen sicher gehalten sind, sieht eine weitere Ausgestaltung der Erfindung einen hinteren Begrenzungsanschlag vor, während die vordere Begrenzung von einer Art Schwelle gebildet ist, die etwas höher als die Auflageflächen liegt. Beim Ein- und Ausschieben der Schubladen werden diese am vorderen Ende etwas an gehoben, um sie über die Schwelle zu heben, hinter der im eingefahrenen Zustand die Vorderseite der Schublade liegt.

Aus Material- und Gewichtsersparnisgründen ist der Containerrahmen vorzugsweise aus rohrförmigen Stäben oder dergleichen aufgebaut. Dies kann nach einer Ausgestaltung der Erfindung in der Weise geschehen, daß an den Ecken des Grundrahmens rohrartige Stützen angeordnet sind, die an den Seiten des Containerrahmens durch parallel beabstandete rohrartige Streben miteinander verbunden sind.

Zur Lagerung, jedoch auch für den Transport werden die Container übereinandergestapelt. Damit sie seitlich nicht gegeneinander verrutschen, sind vorzugsweise dachartige Zentrieraufsätze vorgesehen, die nach einer Ausgestaltung der Erfindung in den hinteren Ecken angeordnet sind. Sie greifen in entsprechende Ausnehmungen an der Unterseite des Containers ein und verhindern ein Verrutschen durch seitliche Kräfte.

Die Oberseite des Containerrahmens ist abgedeckt, damit ein Schutz gegen Regen besteht. Nach einer Ausgestaltung der Erfindung wird die Oberseite durch sandwichförmige Dachplatten abgedeckt, die aus einem Kern aus Kunststoffhartschaum bestehen, der beidseitig vorzugsweise mit glasfaserverstärktem Kunststoff beschichtet ist. Derartiges Material ist relativ leicht und preiswert und hat den Vorteil, daß es eine gewisse Wärmeisolierung bewirkt sowie eine Geräuschdämpfung bei Regenwetter. Auch ein Flattern des Dachs, wie es beispielsweise bei Blechmaterial auftreten kann, wird vermieden.

Wie bereits erwähnt, ist die Größe der Container aus Gründen der Handhabbarkeit begrenzt. Vorzugsweise wird ihre Höhe so gewählt, daß zwei Container übereinander gestapelt werden können bei Einhaltung der üblichen Durchfahrthöhe für Lastkraftwagen. Die Tiefe wird hingegen so gewählt, daß zwei Container in Längsrichtung parallel auf einer üblich großen Ladeplattform Platz haben. Da die Container während des Transports erheblichen Bewegungen ausgesetzt sind, ist es zweckmäßig, Mittel vorzusehen, die zur Lagestabilisierung dienen. Eines besteht erfindungsgemäß darin, daß der Containerrahmen an der Vorderseite, vorzugsweise am Grundrahmen, nach vorn vorstehende Verriegelungsmittel aufweist, die mit entsprechenden Verriegelungsmitteln eines weiteren Containerrahmens zusammenwirken, der mit seiner Vorderseite der Vorderseite des ersten Containerrahmens zugekehrt ist. Nach einer weiteren Ausgestaltung der Erfindung wird das Verriegelungsmittel von einem Haken gebildet, dessen Öffnung in Richtung einer Stirnseite des Containerrahmens weist. Wird ein Container angrenzend an einen bereits aufgestellten Container auf eine Plattform oder einen Untergrund gesetzt, können die beiden Haken miteinander in Eingriff kommen, wodurch die Container in Richtung aufeinander zu bzw. voneinander fort miteinander in Eingriff sind, so daß auf diese Weise ein Verbund von zwei Containern geschaffen ist, der zu einer erheblichen Lagerstabilität beiträgt.

Wie ebenfalls bereits erwähnt, müssen die Schubladen eine gewisse Mindesthöhe einhalten. Außerdem sollen sie so beschaffen sein, daß sie für eine ausreichende Belüftung sorgen. Die Wände sind daher vorzugsweise aus gelochten Blech-oder Kunststoffplatten geformt. Der Boden ist so auszuführen, daß er für die Tiere einen relativ trittsicheren Untergrund bildet, auf dem nach Möglichkeit keine Lachen aus Auscheidungen auftreten. Eine Ausgestaltung der Erfindung sieht vor, daß die Seitenwände aus Blech- oder Kunststoffplatten bestehen, die an der Unterseite nach innen abgekantet sind zur Bildung von Auflagern für die Bodenplatte. Die Bodenplatte ist vorzugsweise ein getrenntes Bauteil, das nach einer Ausgestaltung der Erfindung sandwichförmig aufgebaut ist mit einem Kern aus Kunststoffhartschaum und einer beidseitigen Beschichtung mit Kunststoff, vorzugsweise mit glasfaserverstärktem Kunststoff. Die obere Seite der Beschichtung ist vorzugsweise strukturiert. Eine derartige Bodenplatte hat nur eine verhältnismäßig geringe Durchbiegung, so daß die jeweils darunterliegende Schublade in ihrem Volumen nicht beeinträchtigt ist. Ferner ist die Oberfläche einer derartigen Bodenplatte warm anfühlend (gute Wärmedämmung) und rauh, mithin rutschfest. Die Seitenwände der Schubladen sind vorzugsweise aus Edelstahl oder aus festen Thermoplasten, damit sie auch nach häufigerem Gebrauch und häufigen Reinigungsvorgängen nicht durch Korrosion angegriffen werden.

Auf die oberen Kanten kann ein Rahmen aus Kunststoffleisten gesetzt werden, der eine bessere Handhabung und Stabilität der Schublade ermöglicht. Auch mit den unteren Kanten kann ein Kunststoffrahmen verbunden werden, der gleichzeitig das Auflager bildet für die separate Bodenplatte.

Für den Transport müssen die auf einer Ladeplattform angeordneten Container gesichert werden. Um eine aufwendige Verzurrung zu vermeiden, sieht eine Ausgestaltung der Erfindung vor, daß zusätzlich zu den Zentrierprismen auf der Ladeplattform und auf den Containern und den Verriegelungsmitteln, z.B. den Haken der Container, in der Längsmitte einer Ladeplattform vorzugsweise eines Lastwagens oder eines -anhängers eine Sicherungsvorrichtung angeordnet ist, die ein höhenverstellbares Sicherungsglied aufweist, das von oben mit dem Verriegelungsmittel, z.B. einem Haken, in Eingriff bringbar ist. Die Ladeplattform weist an vorgegebenen Stellen Zentriervorsprünge auf, die mit den bereits erwähnten unteren Öffnungen der Container zusammenwirken, so daß diese nicht verrutschen können. Durch das Verriegeln einander gegenüberstehender Container können diese nicht kippen. Es kann jedoch geschehen, daß durch Stöße ein Container gegenüber dem anderen angehoben wird, so daß die Verriegelung unwirksam wird. Zu diesem Zweck ist das höhenverstellbare Sicherungsglied vorgesehen, das ein Anheben und damit ein Kippen der Container verhindert. Vorzugsweise ist ein Sicherungsglied für jeden Container vorgesehen, wobei es mit jeweils einer eigenen Hubvorrichtung verbunden sein kann. Es können jedoch alternativ auch mehrere Hubvorrichtungen vorgesehen werden, die ein gemeinsames Sicherungsglied betätigen, das nach einer Ausgestaltung der Erfindung von einer durchgehenden horizontalen Stange gebildet sein kann. Die Hubvorrichtungen können nach einer Ausgestaltung der Erfindung ein Ritzel aufweisen, das mit einer Welle drehfest verbunden ist, die z.B. von einem oder beiden Enden des Lastkraftwagens bzw. eines -hängers, betätigbar ist. Durch Drehung der Welle wird auch das Ritzel gedreht und wirkt mit einer Zahnstange zusammen, die das Sicherungsglied anhebt bzw. absenkt.

Die Erfindung wird nachfolgend anhand von Zeichnungen näher erläutert.

Fig. 1 zeigt eine Seitenansicht eines Containerrahmens des erfindungsgemäßen Containersystems.

Fig 2 zeigt eine Draufsicht auf den Container nach Fig. 1.

Fig 3 zeigt einen Schnitt durch die Darstellung nach Fig. 2 entlang der Linie 3-3.

Fig 4 zeigt die Draufsicht auf zwei einander gegenüber angeordnete miteinander verriegelte Container nach der Erfindung.

Fig 5 zeigt die Seitenansicht von zwei übereinander angeordneten Containern nach der Erfindung.

Fig 6 zeigt die Seitenansicht eines Containerstapels auf der Plattform eines Lastwagens mit zugehöriger Sicherungsvorrichtung.

Fig 7 zeigt die Ansicht der Anordnung nach Fig. 6 in Richtung Pfeil 7.

Fig 8 zeigt die Seitenansicht einer Schublade für Container nach den oben stehenden Figuren.

Fig 9 zeigt eine Draufsicht vergrößert auf eine Ecke der Schublade nach Fig. 8.

Fig. 10 zeigt eine Draufsicht auf einen Zuschnitt für zwei Wände, etwa für eine Schublade nach Fig. 8.

Fig. 11 zeigt einen Längsschnitt durch die Schublade nach Fig. 8, jedoch vergrößert und nur teilweise.

Fig. 12 zeigt eine Seitenansicht auf eine etwas abgewandelte Schublade.

Fig. 13 zeigt die Einzelheit 13 nach Fig. 12.

Bevor auf die in den Zeichnungen dargestellten Einzelheiten näher eingegangen wird, sei vorangestellt, daß jedes der beschriebenen Merkmale für sich oder in Verbindung mit Merkmalen der Ansprüche von erfindungswesentlicher Bedeutung sein kann.

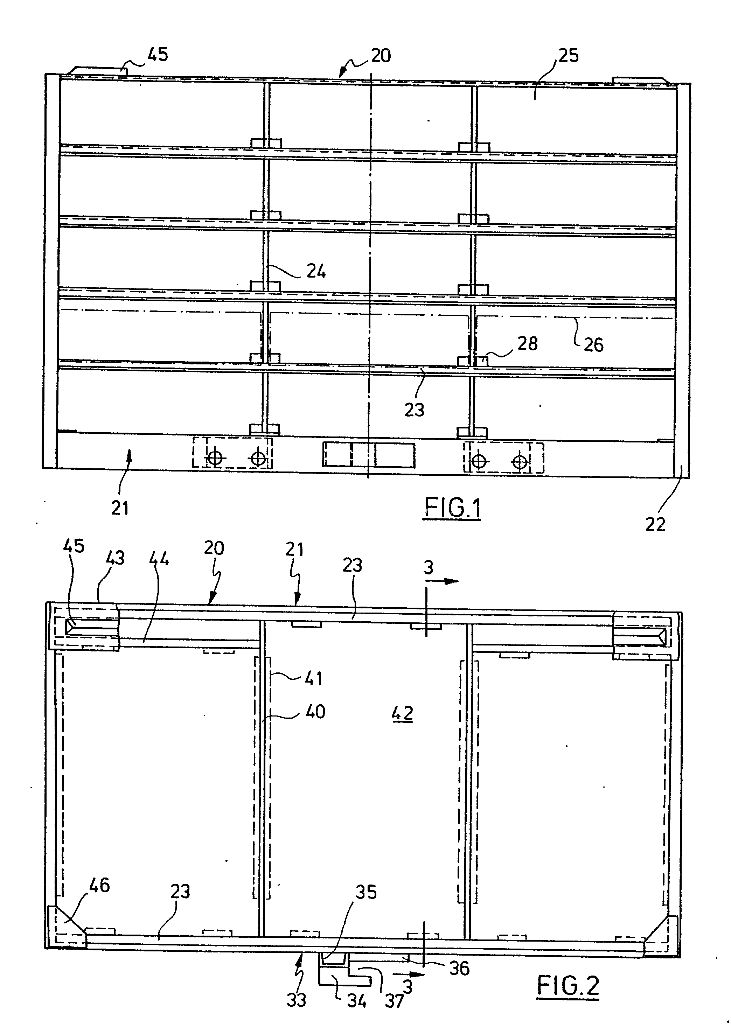

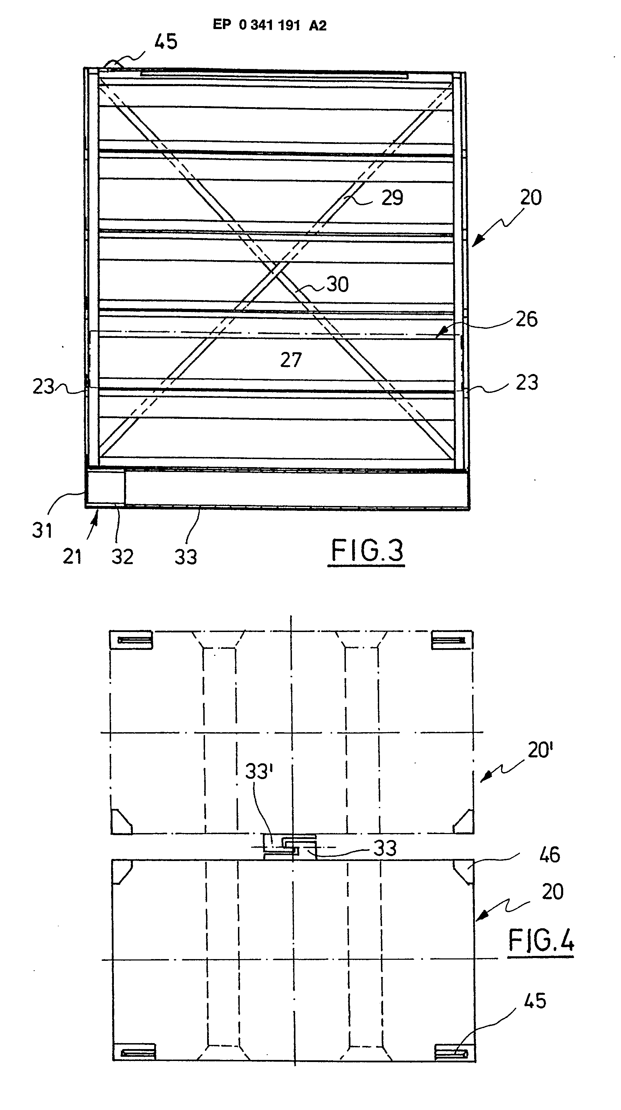

Der in den Figuren 1 bis 3 dargestellte Containerrahmen 20 weist einen rechteckigen Grundrahmen 21 auf, der aus U-Profilen zusammengesetzt ist, deren Steg nach außen weist. An den Ecken sind vertikale Stützen 22 befestigt, die aus Vierkantrohren bestehen. An den Seiten sind die Stützen 22 durch rohrförmige Streben 23 horizontal miteinander verbunden, wobei die Streben an der Vorderseite etwas höher liegen als an der Hinterseite, wie aus Fig. 3 hervorgeht. Die horizontalen Streben 23 sind an der Vorder- und Rückseite durch vertikale

Stützen 24 verbunden, die auf diese Weise einzelne Fächer 25 unterteilen. In der gezeigten Darstellung weist der Container 20 eine Höhe von fünf Fächern und eine Breite von drei Fächern auf. Sie dienen zur Aufnahme von Schubladen, die in Fig. 1 und Fig. 3 durch strichpunktierte Linien bei 26 angedeutet sind. Sie werden geführt und gehalten durch winkelförmige Schienen 27, die in Höhe der Stäbe 24 die Streben 23 miteinander verbinden. Die untere Auflagefläche der Winkelschienen ist im Niveau derart, daß sie etwas tiefer liegt als die Oberseite der vorderen Streben 23, so daß eine aufgenommene Schublade 26 nach vorn nicht herausrutschen kann. An der Hinterseite sind plattenförmige Anschläge 28 mit den Querstreben 23 verbunden im Bereich der vertikalen Stäbe 24, die eine Begrenzung für die Schubladen 26 nach hinten bilden. Zum Einschieben bzw. Herausziehen der Schubladen ist daher erforderlich, deren vorderes Ende etwas über die vorderen Querstrebe hochzuheben.

In den Spalten nebeneinander angeordneter Schubladen 26, d.h. in Höhe der vertikalen Stäbe 24 sind zwei sich kreuzende Zugbänder 29, 30 angeordnet, die mit dem Grundrahmen 21 bzw. den oberen Streben verbunden sind und für eine ausreichende Querstabilität des Containers 20 sorgen. Sie können aus flachem Material bestehen, so daß sie so gut wie keinen Platz benötigen. Im übrigen kann in den Spalten zwischen nebeneinander angeordneten Schubladen 26 an die Zugbänder 29, 30 angrenzend eine gelochte Wand angeordnet sein, die ebenso wie die übrigen Teile aus Edelstahlblech hergestellt sein kann.

Wie aus Fig. 3 zu erkennen, sind Öffnungen im hinteren U-Profil des Grundrahmens 21 vorgesehen, von denen eine bei 31 zu erkennen ist zur Aufnahme der Gabeln eines herkömmlichen Gabelstaplers. Im Bereich der Öffnungen sind Vierkantrohreinsätze 32 angeordnet, an die sich ein Vierkantrohr 33 anschließt, das sich bis zum vorderen U-Profil erstreckt. Wie insbesondere aus Fig. 2 hervorgeht, ist am Steg des vorderen U-Profils des Grundrahmens 21 ein Haken 33 angeordnet. Er besteht aus einem rechtwinkligen Kunststoffteil 34, dessen anderer Schenkel an einem U-förmigen Profil 35 befestigt ist, beispielsweise mittels Schrauben, das seinerseits mit dem Grundrahmen 21 verschweißt ist. Gegen den Grundrahmen 21 ist außerdem eine Rippe 36 gesetzt, beispielsweise durch Verschweißen eines kanalförmigen Profils zur Bildung einer definierten Hakenöffnung 37, die in Richtung einer Stirnseite des Containers 20 weist.

Wie aus Fig. 2 hervorgeht, sind die horizontalen Querstreben 23 der obersten Lage durch Streben 40 miteinander verbunden, die Auflagerbleche 41 aufweisen (strichpunktiert gezeichnet) für Dachplatten 42, die von oben aufgelegt werden. Sie bestehen vorzugsweise aus Kunststoffhartschaum, der beidseitig beschichtet ist. An den hinteren Ecken des Containers sind auf der Oberseite rechteckige Blechplatten 43 angeordnet, die auf der hinteren oberen Strebe 23 und einer dazu parallelen Strebe 44 aufliegt, die die obere Stirnstrebe 23 mit der zugeordneten Strebe 40 verbindet. Auf den Blechplatten 43 sind prismatische Erhebungen 45 angeordnet, die Zentrierzwecken dienen. An der vorderen Ecken sind annähernd dreieckförmige Platten 46 angeordnet als Aufstellflächen für einen darüber angeordneten Container. Die Zentriervorsprünge 45 greifen hinter die Innenkante des Grundrahmens, und zwar jeweils gegen ein Quer- und Längsprofil einer Ecke des Grundrahmens 21, so daß dieser gegen eine Verschiebung gesichert ist.

In Fig. 4 sind zwei Container 20 bzw. 20′ Vorderseite an Vorderseite stehend gezeichnet, wobei die Haken 33, 33′ miteinander in Eingriff sind. Dieser Eingriff kann ohne weiteres dadurch hergestellt werden, daß beim Abstellen des zweiten Containers dessen Haken von oben in die Öffnung des anderen Hakens fährt. Auf diese Weise sind die Container 20, 20′ an einer Bewegung aufeinander zu bzw. voneinander fort im Sinne eines Kippens gesichert. In Fig. 4 ist gestrichelt auch die Anordnung der Rohre angedeutet, die die Gabeln eines Gabelstaplers aufnehmen. Aus Fig. 4 wird auch deutlich, weshalb die Einführöffnungen für die Gabeln an der Rückseite der Container 20 bzw. 20′ liegen.

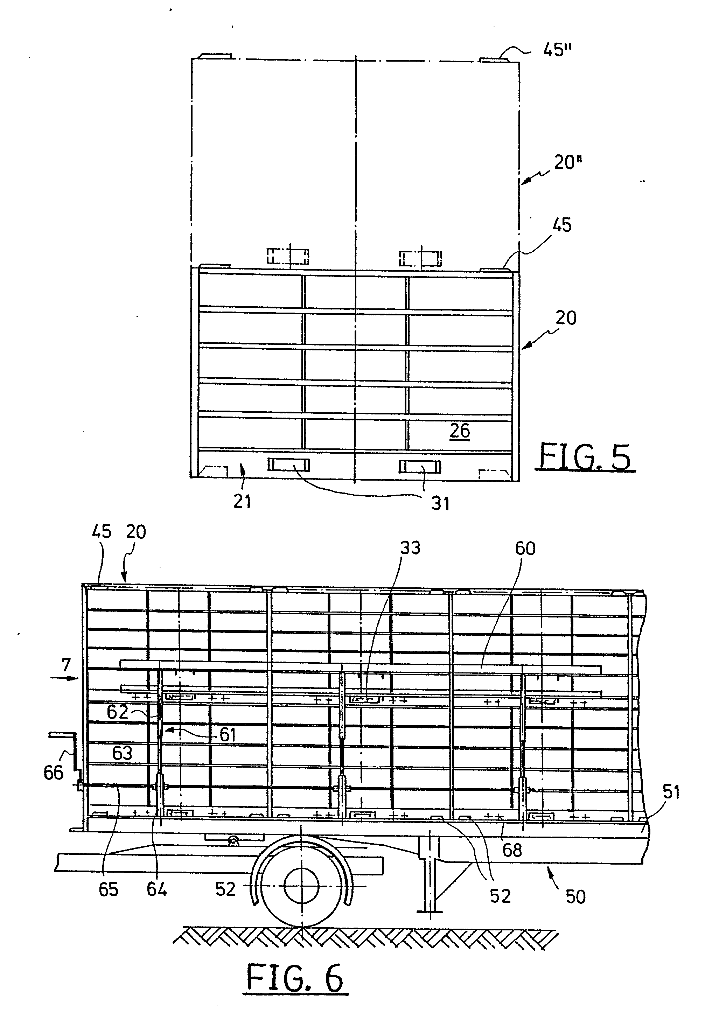

Fig. 5 zeigt die Übereinanderanordnung von zwei Containern 20, 20″ von der Rückseite aus gesehen mit den Aufnahmeöffnungen 31 im Containerrahmen 21 für die Gabeln eines Gabelstaplers.

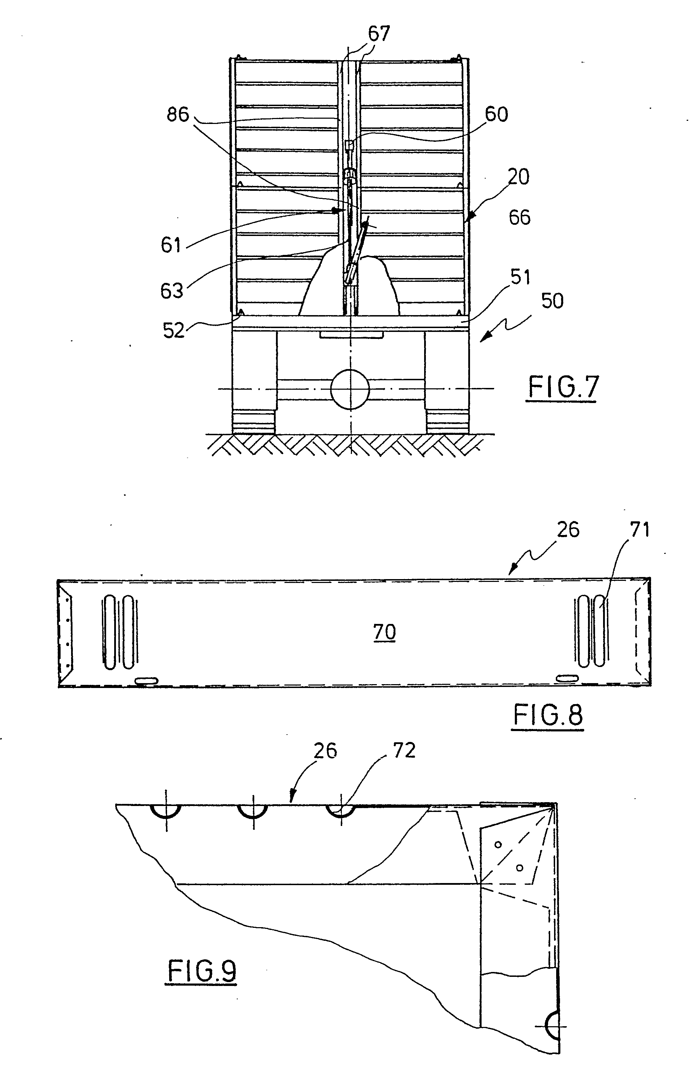

Fign. 6 und 7 zeigen andeutungsweise ein Transportfahrzeug 50 mit einer Ladeplattform 51 zur Aufnahme mehrerer Stapel aus jeweils zwei Containern, wobei, wie aus Fig. 7 hervorgeht, zwei Stapel von Containern 20 nebeneinander in der Breite der Plattform 51 Platz haben. In Längsrichtung können hintereinander z.B. sechs,also z.B. insgesamt vierundzwanzig Container 20 auf der Plattform 51 angeordnet werden können. Zentrierprismen 52 an den Längsseiten der Plattform 51 entsprechen den Zentriervorsprüngen 45 der Container 20. Sie sichern die seitliche Lage der Container 20 und verhindern ein seitliches Abrutschen. Naturgemäß verhindern sie auch ein Verdrehen der Container. Einander benachbart gegenüberstehende Container 20 werden, wie anhand der Fign. 2 und 4 beschrieben, mittels der Haken 33, 33' miteinander verklammert. Schließlich ist eine Sicherungsstange 60 vorgesehen, die mittels drei Hubvorrichtungen 61 höhenverstellbar angeordnet ist. Nimmt sie die strichpunktierte Lage ein, liegt sie auf den Haken 33, 33' auf und verhindert mithin ein Anheben bzw. Kippen der Container. Die Hubvorrichtungen 61 besitzen eine Hubstange 62, die bei 63 gezahnt ist. Der gezahnte Abschnitt 63 greift in ein Rohr 64, durch das hindurch und von dem eine Welle 65 geführt bzw. gelagert ist. Im Rohr 64, das auf der Plattform 51 befestigt ist, ist ein Ritzel (nicht gezeigt) auf der Welle 65 drehfest angebracht. An den Enden ist die Welle mit einer Kurbel 66 verbunden. Die Sicherungsstange 60 und die Hubvorrichtungen 61 sind in der Längsmitte auf der Plattform 51 angeordnet. Bei Drehung der Kurbel 66 und damit der Welle 65 hebt oder senkt sich die Sicherungsstange 60.

Die gezeigte Sicherung der Container 20 auf der Plattform 51 macht Wände und Dach des Transportwagens 50 überflüssig, die sonst ein Kippen oder Abrutschen der Container verhindern würden. Auf diese Weise wird die Ladefläche der Ladeplattform 51 günstiger ausgenutzt. Durch Wegfall von Wänden und Dächern wird auch eine bessere Belüftung der Container bzw. der Schubladen 26 erreicht. Die Container 20 haben ihrerseits eine witterungssichere Dachstruktur, so daß auch aus diesem Grund ein Dach für den Transportwagen 50 entfallen kann.

Es bleibt noch nachzutragen, daß die Welle 65 an den Stirnseiten des Wagens 50 durch eine oder zwei parallele Stützen 67 drehbar gelagert wird. Es versteht sich, daß bezüglich der Kurbel 66 eine Sperre notwendig ist, um die eingenommene Lage der Sicherungsstange 60 zu verriegeln. Nicht gezeigte Windschutzelemente können mit den oberen Zentrierprismen 45 der Container 20 verbunden bzw. an diesen aufgehängt werden und mittels nicht näher dargestellter Schnellverschlüsse 68 am Grundrahmen der unteren Container 20 befestigt werden. Die Windschutzelemente sind vorzugsweise in Leichtbauweise gefertigt.

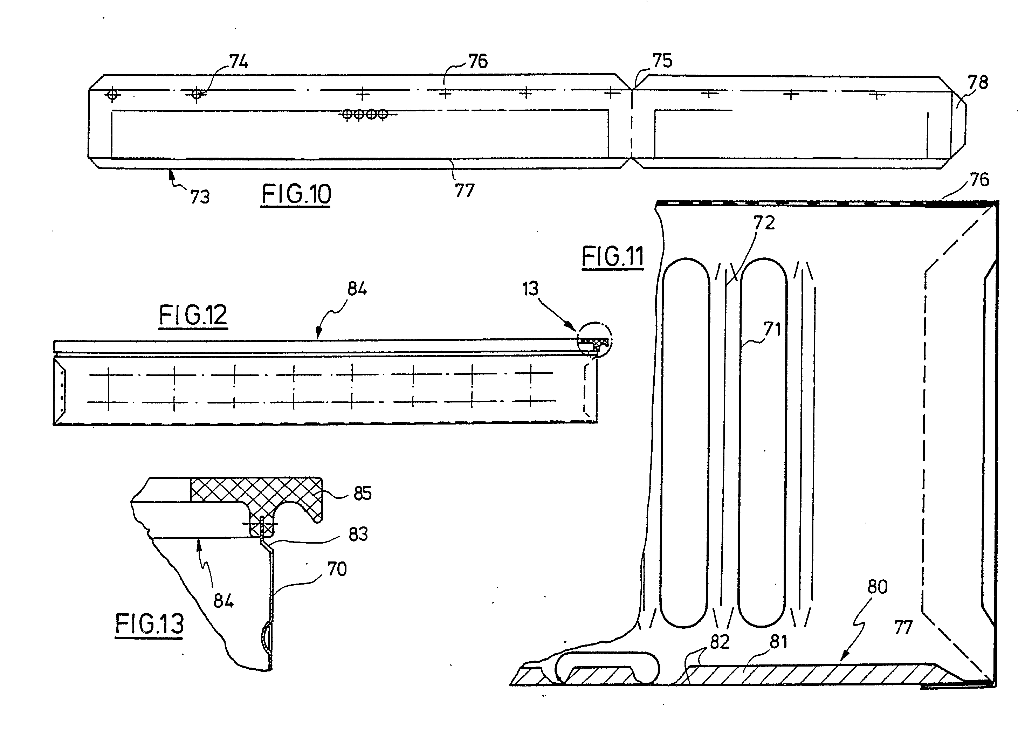

In den Fign. 8 bis 13 sind Ausführungsformen für Schubladen 26 dargestellt. Die quaderförmige Schublade 26 nach den Fig. 8, 9 und 11 weist Seitenwände 70 auf, die mit Langlöchern 71 versehen sind. Zwischen den Langlöchern 71 sind Sicken 72 zur Versteifung geformt. Fig. 10 zeigt einen Blechzuschnitt für zwei benachbarte Seitenwände. Der Blechzuschnitt 73 ist statt mit Langlöchern 71 hier mit Kreislöchern 74 gezeigt. Zur Herstellung der Schublade 26 wird der Zuschnitt 23 um die Biegelinie 75 rechtwinklig gebogen, während die oberen Streifen 76 bzw. die unteren Streifen 77 nach einwärts gebogen werden, wie etwa in Fig. 9 bzw. Fig. 11 zu erkennen. Mittels endseitiger Laschen 78 werden zwei derartige Zuschnitte 73 miteinander verschweißt zur Bildung eines Schubladenrahmens, wobei die unteren Streifen 77 Auflager bilden für eine Bodenplatte 80, die eingelegt wird, bevor die Seitenwände miteinander verschweißt werden. Die Bodenplatte 80 ist in Sandwichbauweise hergestellt und besteht aus einem Hartschaumkern 81, der beidseitig bei 82 beschichtet ist, vorzugsweise mit glasfaserverstärktem Kunststoff. Die nach innen weisende Seite der Bodenplatte 80 ist vorzugsweise strukturiert, damit das aufgenommene Geflügel ausreichend Halt befindet.Bei der Ausführungsform nach den Fign. 12 und 13 ist die Oberkante der Seitenwände 70 nicht umgekantet, sondern etwas gekröpft, wie bei 83 angedeutet. Auf die oberen Kanten ist ein Rahmen 84 aus vorzugsweise thermoplastischem Kunststoff gesteckt, der dafür einen unteren Schlitz aufweist, in den die Kante der Seitenwände 70 eingeführt wird. Vorzugsweise erfolgt auch eine Verklebung, eine formschlüssige Verbindung durch Stifte oder Nieten, um den Rahmen 84 fest mit der Schublade zu verbinden. Der Rahmen 84 kann aus vier miteinander verschweißten oder sonstwie verbundenen Kunststoffstäben bestehen. Der Rahmen 84 weist an der Vorderseite der Schublade einen nach vorn überstehenden Griffabschnitt 85 auf, damit die Schublade leichter erfaßt und bewegt werden kann. Auch mit den unteren Kanten der Seitenwände kann ein Kunststoffrahmen verbunden sein, der dann gleichzeitig das Auflager bildet für eine Bodenplatte 80. Das Material für die Seitenwände 70 besteht vorzugsweise aus Edelstahl.

Durch die gezeigte Anordnung der Containerstapel ergibt sich zwischen diesen in der Längsachse eine Gasse 86, die zur Belüftung der Schubladen genutzt werden kann, entweder durch Fahrtwind oder mittels eines Lüfters im Stillstand.

## Patentansprüche

1. Containersystem zum Transport von Geflügel oder anderen Kleintieren, mit einem quaderförmigen Containerrahmen, der in Reihe von übereinander und nebeneinander angeordneten horizontalen Fächern unterteilt ist, die Auflagerflächen für nach oben offene Schubladen aufweisen, die entfernbar und in die Fächer einsetzbar sind, wobei in den Fächern Anschläge oder dergleichen angeordnet sind, die mit den aufgenommenen Schubladen zusammenwirken und in ihrer Lage sichern und wobei die Oberseite des Rahmens von einer Decke abgeschlossen ist, dadurch gekennzeichnet, daß die Eintrittsöffnungen der Fächer (25) an der Längsseite des Rahmens (20) angeordnet sind, zwischen vertikalen Fächeranordnungen der Rahmen (20) einen Quer- vorzugsweise Kreuzverband (29, 30) aufweist, und ein steifer Grundrahmen (21) mit einseitigen Einfahröffnungen (31) für die Gabel eines Gabelstaplers vorgesehen ist.

2. Containersystem nach Anspruch 1, dadurch gekennzeichnet, daß die Aufnahmefächer (25) vorzugsweise rechtwinklige seitliche Gleitflächen aufweisen, die die aufgenommenen Schubladen (26) nach unten und seitlich führen und sichern.

3. Containersystem nach Anspruch 1 oder 2, dadurch gekenn zeichnet, daß die Fächer (25) eine hintere Begrenzung (28) aufweisen und die vordere Begrenzung der Einschuböffnungen der Aufnahmefächer (25) nach Art einer Schwelle etwas höher liegt als die Auflageflächen.

4. Containersystem nach einem der Ansprüche 1 bis 3, dadurch gekennzeichnet, daß der Containerrahmen (20) aus rohrförmigen Stäben aufgebaut ist.

5. Containersystem nach Anspruch 4, dadurch gekennzeichnet, daß an den Enden des Grundrahmens (21) rohrartige Stützen (22) angeordnet sind, die an den Seiten des Containerrahmens (20) durch parallel beabstandete rohrförmige Streben (23) miteinander verbunden sind.

6. Containersystem nach einem der Ansprüche 1 bis 5, bei dem auf der Oberseite des Containerrahmens mindestens ein dachähnlicher Zentrieraufsatz (45) angeordnet ist, dadurch gekennzeichnet, daß zwei Zentrieraufsätze (45) in den beiden hinteren Ecken angeordnet sind.

7. Containersystem nach einem der Ansprüche 1 bis 6, dadurch gekennzeichnet, daß die Oberseite durch sandwichförmige Dachplatten (42) abgedeckt ist, die aus einem Kern aus Kunststoffhartschaum bestehen, der beidseitig mit Kunststoff, vorzugsweise glasfaserverstärktem Kunststoff beschichtet ist.

8. Containersystem nach einem der Ansprüche 1 bis 7, dadurch gekennzeichnet, daß der Containerrahmen (20) an der Vorderseite vorzugsweise am Grundrahmen (21) nach vorn vorstehende Verriegelungsmittel (32) aufweist, die mit entsprechenden Verriegelungsmitteln eines weiteren Containerrahmens zusammenwirken, der mit seiner Vorderseite der Vorderseite des ersten Containerrahmens zugekehrt ist.

9. Containersystem nach Anspruch 8, dadurch gekennzeichnet, daß ein vorzugsweise aus nachgebendem Kunststoff geformter Haken (34) vorgesehen ist, dessen Öffnung (37) in Richtung einer Stirnseite des Containerrahmens (20) weist.

10. Containersystem nach einem der Ansprüche 1 bis 9, dadurch gekennzeichnet, daß die Seitenwände (70) der Schubladen (26) eine getrennte, keine Bodenlöcher aufweisende sandwichförmige Bodenplatte (80) halten, die einen Kern aus Kunststoffhartschaum (81) aufweist, der beidseitig mit Kunststoff (82),vorzugsweise glasfaserverstärktem Kunststoff, beschichtet ist.

11. Containersystem nach Anspruch 10, dadurch gekennzeichnet, daß die dem Schubladeninneren zugekehrte Beschichtung der Bodenplatte (80) strukturiert ist.

12. Containersystem nach Anspruch 11 oder 12, dadurch gekennzeichnet,daß die Seitenwände (70) aus Blech- oder Kunststoffplatten (73) bestehen, die an der Unterseite nach innen abgekantet sind zur Bildung von Auflagern für die Bodenplatte (80).

13. Containersystem nach einem der Ansprüche 1 bis 12, dadurch gekennzeichnet, daß die Seitenwände (70) der Schubladen (26) Öffnungen (71) bzw. (74) aufweisen.

14. Containersystem nach einem der Ansprüche 1 bis 13, dadurch gekennzeichnet, daß die Seitenwände (70) der Schubladen (26) nahe dem Boden Abflußöffnungen aufweisen.

15. Containersystem nach einem der Ansprüche 1 bis 14, dadurch gekennzeichnet, daß die Seitenwände (70) der Schubladen (26) mit Sicken (72) versehen sind.

16. Containersystem nach einem der Ansprüche 1 bis 15, dadurch gekennzeichnet, daß auf die obere Kante der Seitenwände (70) der Schubladen ein vorzugsweise einteiliger Kunststoffrahmen aufgesetzt ist, vorzugsweise mittels eines unteren Schlitzes im Rahmen (84).

17. Containersystem nach einem der Ansprüche 1 bis 16, dadurch gekennzeichnet, daß die untere Kante der Seitenwände der Schubladen mit Kunststoffleisten verbunden sind, die vorzugsweise durch Eingriff in einen oberen Schlitz der Leisten befestigt sind und die Leisten einen nach innen weisenden Ansatz zur Aufnahme einer Bodenplatte aufweisen.

18. Containersystem nach einem der Ansprüche 8 bis 17, dadurch gekennzeichnet, daß in der Längsmitte einer Ladeplattform (51) eines Lastwagens (50) oder -anhängers eine Sicherungsvorrichtung angeordnet ist, die ein höhenverstellbares Sicherungsglied (60) aufweist, das von oben mit dem Verriegelungsmittel in Eingriff bringbar ist.

19. Containersystem nach Anspruch 18, dadurch gekennzeichnet, daß mehrere Hubvorrichtungen (61) mit einem gemeinsamen Sicherungsglied (60) verbunden sind oder jeweils ein eingenes Sicherungsglied aufweisen und die Hubvorrichtungen (61) durch eine gemeinsame Verstellvorrichtung (66, 65) betätigbar sind.

20. Containersystem nach Anspruch 19, dadurch gekennzeichnet, daß die Verstellvorrichtung eine vorzugsweise durch eine Kurbel (66) verdrehbare Welle (65) aufweist, die mit den Hubvorrichtungen (61) verbunden ist.

21. Containersystem nach Anspruch 20, dadurch gekennzeichnet, daß die Hubvorrichtungen ein Ritzel aufweisen, das mit der Welle (65) drehfest verbunden ist und mit einer Zahnstange (63) in Eingriff ist, die vertikal geführt ist und das Sicherungsglied (60) trägt.

22. Containersystem nach einem der Ansprüche 19 bis 21, dadurch gekennzeichnet, daß eine durchgehende horizontale Stange (60) als Sicherungsglied vorgesehen ist.

23. Containersystem nach einem der Ansprüche 18 bis 22, dadurch gekennzeichnet, daß die Ladefläche (51) Zentriervorsprünge (52) aufweist, die mit unteren Ausnehmungen des Containerrahmens (20) in Eingriff bringbar sind.

24. Containersystem nach einem der Ansprüche 18 bis 23, dadurch gekennzeichnet, daß zwischen den auf der Ladefläche (51) gestapelten Containern eine mittige Luftgasse (86) gebildet ist, durch die mittels Wind bei Fahrt bzw. Ventilatoren und bei Stillstand eine Belüftung der Tiere in den Schubladen während des ganzen Transportes gegeben ist.

FIG.1

FIG.2

FIG.3

FIG.4

FIG. 5

FIG. 6

FIG.7

FIG.8

FIG.9

FIG.10

74    76    75    78

73    FIG.10    77

FIG.11

72

71

FIG.12    84    13

85

83

84    70

FIG.13

80

82    81    77

EP 0 341 191 A2